# EUROPÄISCHE PATENTSCHRIFT

(11) **EP 0 877 171 B1**
(45) Veröffentlichungstag und Bekanntmachung des Hinweises auf die Patenterteilung: **18.07.2001**
(21) Anmeldenummer: 98107556.7
(22) Anmeldetag: 24.04.1998
(51) Int. Cl.: F16B 5/06, F16B 21/09

(54) **Kunststoffelement**
Member made of plastic material
Elément en matière plastique

(30) Priorität: 05.05.1997 DE 29708112 U
(43) Veröffentlichungstag der Anmeldung: 11.11.1998
(73) Patentinhaber: TRW Automotive Electronics & Components GmbH & Co. KG, 78315 Radolfzell (DE)
(72) Erfinder: Kraus, Willibald, 67296 Grünstadt (DE)
(74) Vertreter: Schieschke, Klaus, Dipl.-Ing.

(56) Entgegenhaltungen:
- EP-A- 0 020 308
- DE-A- 19 532 360
- DE-C- 4 014 589
- DE-U- 29 718 487

## Beschreibung

Die Erfindung bezieht sich auf ein Kunststoffelement, insbesondere Klipp oder Halteelement zur Verbindung eines Karosserieteils eines Kraftfahrzeuges mit einem Anschlussteil, mit einem bolzenartigen Grundkörper mit zulaufendem Ende zum Einsetzen in eine Öffnung des Karosserieteils und mit einem Verbindungsteil zum Zusammenfügen mit dem Anschlussteil, wobei der Grundkörper an dem dem Verbindungsteil gegenüberliegenden Ende einen offenen Innenbereich aufweist und mehrere, sich in Längsrichtung erstreckende, faltenartig eingezogene Bereiche besitzt, zwischen welchen auf dem Umfang des Grundkörpers Rastelemente angeordnet sind.

Als Stand der Technik ist bereits ein derartiger Element als Verbindung zwischen einem Träger, insbesondere einem Karosserieteil eines Kraftfahrzeuges und einem Plattenelement, insbesondere einer Türverkleidung bekannt (DE 195 04 692 A1). Hier ist der Grundkörper bolzenartig ausgebildet mit einem offenen Innenbereich, wobei mehrere, sich in Längsrichtung erstreckende, faltenartig eingezogene Bereiche vorhanden sind, zwischen welchen auf dem Umfang des Grundkörpers verteilt Rastelemente angeordnet sind.

Weiterhin ist ein derartiger Element aus der DE 195 46 402.8 bekannt. Diese Konstruktion kann beispielsweise zur Halterung von Zierleisten, zur Aufnahme einer Türverkleidung oder eines Rohrhalters dienen.

Der vorliegenden Erfindung liegt die Aufgabe zugrunde, eine Konstruktion der eingangs genannten Art so zu verbessern, dass sich eine Vereinfachung in der Montage des Kunststoffelementes mit einem Träger, insbesondere einem Karosserieteil ergibt.

Diese Aufgabe wird erfindungsgemäß dadurch gelöst, dass im offenen Innenbereich des Grundkörpers ein Zapfen angeordnet ist, welcher sich in Längsrichtung erstreckt und stirnseitig einen den Grundkörper überragenden Führungsbereich aufweist. Durch diesen Zapfen mit dem Führungsbereich ergibt sich der Vorteil, dass das erfindungsgemäße Kunststoffelement exakt geführt in eine Trägeröffnung eingesetzt werden kann. Der Zapfen mit dem Führungsbereich erhöht darüber hinaus vorteilhafterweise die Stabilität des Kunststoffelements.

Der Zapfen kann im Querschnitt profiliert ausgebildet sein, wobei das Profil auf die eingezogenen Bereiche abgestellt ist. Finden beispielsweise vier über den Umfang verteilte, eingezogene Bereiche Anwendung, kann der Zapfen im Querschnitt kreuzförmig ausgebildet sein. Hierbei kann der Führungsbereich stirnseitig eine Wölbung aufweisen, wodurch sich eine weitere Montageerleichterung ergibt.

Bei einem Element mit einer zwischen dem Grundkörper und dem Verbindungsteil angeordneten, umlaufenden, federnden Dichtlippe kann diese zweiteilig ausgebildet sein mit einem Lagerkörper aus einem härteren Material und einem am stirnseitigen Umfang angeordneten, ringförmigen Dichtkörper aus weicherem Material. Der Lagerkörper und der Dichtkörper können im Zweikomponenten-Spritzverfahren hergestellt werden.

Die Erfindung wird nachfolgend anhand von in der Zeichnung dargestellten Ausführungsbeispielen näher beschrieben. In der Zeichnung zeigen:
- Fig. 1: eine Seitenansicht des Kunststoffelements;
- Fig. 2: einen Schnitt nach der Linie II-II, wobei Fig. 2a eine andere Ausführungsform als Fig. 2b bedeutet;
- Fig. 3: eine Schnitt nach der Linie III-III in Fig. 1;
- Fig. 4: eine perspektivische Ansicht des erfindungsgemäßen Kunststoffelementes.

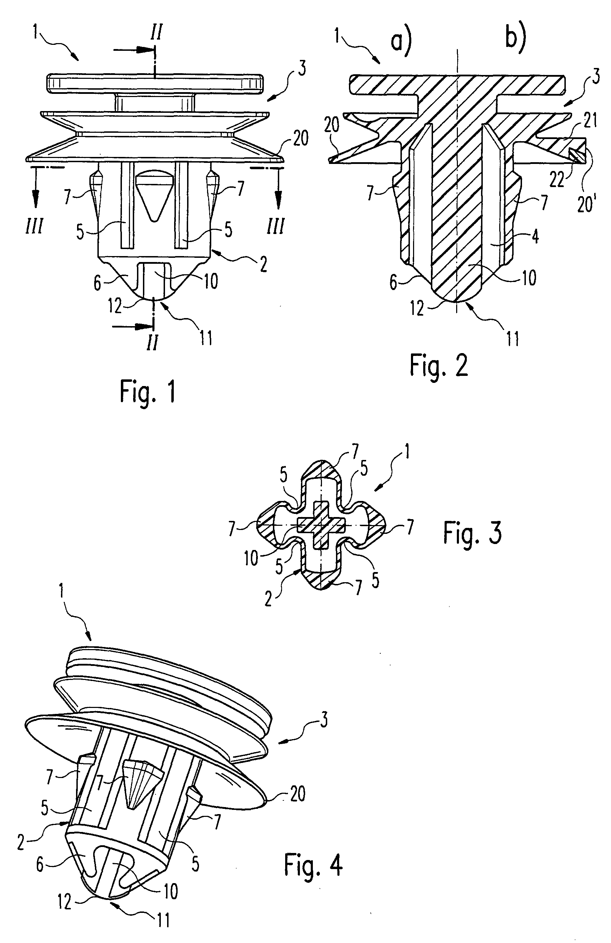

Das in den Fig. 1-4 dargestellte Kunststoffelement 1 besteht im Wesentlichen aus einem Grundkörper 2 und einem Verbindungsteil 3. Der Verbindungsteil 3 kann beliebig gestaltet sein und beispielsweise zur Befestigung einer Wandverkleidung, einer Türverkleidung, einer Halteleiste oder anderer Elemente im Innenraum eines Kraftfahrzeuges dienen.

Der Grundkörper 2 ist bolzenartig ausgebildet und weist ein in etwa konisch zulaufendes Ende 6 auf, mit welchem der Grundkörper 2 in eine nicht dargestellte Öffnung eines Trägers, beispielsweise eine Kraftfahrzeugkarosserie, eingesetzt werden kann.

Der Grundkörper besitzt einen hohlen Innenraum 4 nach Fig. 2a+b und ist in beispielsweise vier faltenartig eingezogene Bereiche 5 aufgeteilt, welche sich in Längsrichtung erstrekken. Zwischen diesen faltenartig eingezogenen Bereichen sind Rastelemente 7 angeordnet, welche hinter die Öffnung des nicht näher dargestellten Trägers greifen können. Diese Rastelemente 7 können beliebig gestaltet sein.

Der Innenbereich 4 des Grundkörpers 2 weist nach Fig. 2a+b und 3 einen Zapfen 10 auf, welcher sich in Längsrichtung erstreckt. Stirnseitig ist der Zapfen 10 mit einem den Grundkörper 2 überragenden Führungsbereich 11 ausgestattet. Dieser Führungsbereich 11 kann in Form einer Wölbung 12 ausgebildet sein.

Der Zapfen 10 ist vorteilhafterweise im Querschnitt profiliert gestaltet: Finden eingezogene Bereiche 5 Anwendung, so kann der Zapfen 10 im Querschnitt auf diese eingezogenen Bereiche abgestellt sein. Beispielsweise sind gemäß den Fig. 1 bis 3 vier über den Umfang verteilte, eingezogene Bereiche 5 vorhanden. Entsprechend ist nach Fig. 3 der Zapfen 10 im Querschnitt kreuzförmig ausgebildet mit z.B. gleich langen Schenkeln.

Wie insbesondere aus den Fig. 1, 2a und 4 ersichtlich, befindet sich zwischen dem Grundkörper 2 und dem Verbindungsteil 3 eine umlaufende, federnde Dichtlippe 20. Während bei der Ausführungsform Fig. 2a diese Dichtlippe 20 einteilig mit dem gesamten Element 1 ausgebildet ist, besteht nach Fig. 2b die Möglichkeit, dass die Dichtlippe 20' zweiteilig ausgebildet ist mit einem Lagerkörper 21 aus einem härteren Material und einem am stirnseitigen Umfang angeordneten, ringförmigen Dichtkörper 22 aus weicherem Material. Hierbei können der Lagerkörper 21 und der Dichtkörper 22 im Zweikomponenten-Spritzverfahren hergestellt sein.

Durch die besondere Gestaltung des Kunststoffelements 1 mit dem Zapfen 10 mit Führungsbereich 11 und Wölbung 12 ergibt sich der Vorteil, dass der bolzenartige Grundkörper 2 auf einfache Weise in eine nicht näher dargestellte Öffnung eines Trägers eingesetzt werden kann. Hieraus resultiert eine Montagehilfe, welche außerdem zur Stabilität des gesamten Elements 1 beiträgt. Durch die spezielle Gestaltung der Dichtlippe 20', welche im Zweikomponenten-Spritzverfahren nach Fig. 2b hergestellt sein kann, wird außerdem eine verbesserte Dichtigkeit gegenüber einer Trägeröffnung bzw. eine verbesserte Anpassung an die vorliegenden Gegebenheiten erzielt.

## Patentansprüche

1. Kunststoff-Element, insbesondere Klipp oder Halteelement zur Verbindung eines Karosserieteils eines Kraftfahrzeuges mit einem Anschlussteil,
mit einem bolzenartigen Grundkörper (2) mit zulaufendem Ende (6) zum Einsetzen in eine Öffnung des Karosserieteils und mit einem Verbindungsteil (3) zum Zusammenfügen mit dem Anschlussteil,
wobei der Grundkörper (2) an dem dem Verbindungsteil (3) gegenüberliegenden Ende einen offenen Innenbereich (4) aufweist und mehrere, sich in Längsrichtung erstreckende, faltenartig eingezogene Bereiche (5) besitzt, zwischen welchen auf dem Umfang des Grundkörpers Rastelemente (7) angeordnet sind,
**dadurch gekennzeichnet,**
dass im offenen Innenbereich (4) des Grundkörpers (2) ein Zapfen (10) angeordnet ist, welcher sich in Längsrichtung erstreckt und stirnseitig einen den Grundkörper (2) überragenden Führungsbereich (11) aufweist.

2. Element nach Anspruch 1, **dadurch gekennzeichnet,** dass der Zapfen (10) im Querschnitt profiliert ausgebildet ist.

3. Element nach Anspruch 2, **dadurch gekennzeichnet,** dass der Zapfen (10) im Querschnitt auf die eingezogenen Bereiche (5) abgestellt ist.

4. Element nach Anspruch 2, mit vier über den Umfang verteilten, eingezogenen Bereichen (5), **dadurch gekennzeichnet,** dass der Zapfen (10) im Querschnitt kreuzförmig ausgebildet ist.

5. Element nach einem der vorhergehenden Ansprüchen, **dadurch gekennzeichnet,** dass der Führungsbereich (11) eine Wölbung (12) aufweist.

6. Element nach einem oder mehreren der vorhergehenden Ansprüche, mit einer zwischen dem Grundkörper (2) und dem Verbindungsteil (3) angeordneten umlaufenden federnden Dichtlippe, **dadurch gekennzeichnet,** dass die Dichtlippe (20') zweiteilig ausgebildet ist mit einem Lagerkörper (21) aus härterem Material und einem, am stirnseitigen Umfang angeordneten, ringförmigen Dichtkörper (22) aus weicherem Material.

7. Element nach Anspruch 6, **dadurch gekennzeichnet,** dass der Lagerkörper (21) und der Dichtkörper (22) im Zweikomponenten-Spritzverfahren hergestellt sind.

## Claims

1. Plastic element, in particular clip or holding element, for connecting a body part of a motor vehicle to a joining part, having a bolt-like base body (2) with a tapering end (6) for inserting into an opening in the body part, and having a connecting part (3) for joining to the joining part, the base body (2) having an open inner region (4) at the end which lies opposite the connecting part (3) and having a plurality of regions (5) which extend in the longitudinal direction, are contracted in a fold-like manner and between which latching elements (7) are arranged on the circumference of the base body, characterized in that a stud (10) is arranged in the open inner region (4) of the base body (2), the said stud extending in the longitudinal direction and on the end side having a guide region (11) projecting beyond the base body (2).

2. Element according to Claim 1, characterized in that the stud (10) is of profiled design in cross section.

3. Element according to Claim 2, characterized in that the stud (10) is matched in cross section to the contracted regions (5).

4. Element according to Claim 2, having four contracted regions (5) distributed over the circumference, characterized in that the stud (10) is of cross-shaped design in cross section.

5. Element according to one of the preceding claims, characterized in that the guide region (11) has a curvature (12).

6. Element according to one or more of the preceding claims, having an encircling, resilient sealing lip arranged between the base body (2) and the connecting part (3), characterized in that the sealing lip (20') is of two-part design with a bearing body (21) made of a harder material and an annular sealing body (22) which is made of a softer material and is arranged on the end-side circumference.

7. Element according to Claim 6, characterized in that the bearing body (21) and the sealing body (22) are produced by two-component injection moulding.

## Revendications

1. Elément en matière plastique, notamment pince ou élément de retenue servant à relier une pièce de carrosserie d'un véhicule automobile à une pièce de raccordement,
comportant un corps de base en forme de goujon (2) comportant une extrémité pointue (6) destinée à être insérée dans une ouverture de la pièce de carrosserie, et une pièce de jonction pour l'assemblage avec la pièce de raccordement,
dans lequel le corps de base (2) comporte, sur l'extrémité tournée vers la pièce de liaison (3), une partie intérieure ouverte (4) et possède plusieurs parties (5), qui s'étendent dans la direction longitudinale et sont dans une position rentrante à la manière de plis et entre lesquelles des éléments d'encliquetage (7) sont disposés sur la périphérie du corps de base,
caractérisé en ce
que dans la partie intérieure ouverte (4) du corps de base (2) est disposée une tige (10), qui s'étend dans la direction longitudinale et possède frontalement une partie de guidage (11) qui fait saillie au-delà du corps de base (2).

2. Elément selon la revendication 1, caractérisé en ce que la tige (10) est agencée avec une forme profilée en coupe transversale.

3. Elément selon la revendication 2, caractérisé en ce que la tige (10) est adaptée, en coupe transversale, aux parties rentrantes (5).

4. Elément selon la revendication 2, comportant quatre parties rentrantes (5), qui sont réparties sur la périphérie, caractérisé en ce que la tige (10) est agencée avec une forme en croix en coupe transversale.

5. Elément selon l'une des revendications précédentes, caractérisé en ce que la partie de guidage(11) possède une zone cintrée (12).

6. Elément selon une ou plusieurs des revendications précédentes, comportant une lèvre d'étanchéité élastique circonférentielle disposée entre le corps de base (2) et la partie de liaison (3), caractérisé en ce que la lèvre d'étanchéité (20') est formée de deux éléments comprenant un corps de support (21) en un matériau plus dur et un corps annulaire d'étanchéité (22) disposé sur la périphérie frontale, réalisé en un matériau plus mou.

7. Elément selon la revendication 6, caractérisé en ce que le corps de support (21) et le corps d'étanchéité (22) peuvent être fabriqués selon le procédé d'injection à deux constituants.
